# EUROPEAN PATENT APPLICATION

(11) **EP 4 838 377 A1**
(43) Date of publication of application: **11.11.2026**
(21) Application number: 26176709.9
(22) Date of filing: 05.05.2026
(51) Int. Cl.: G06F 16/25, G06F 16/242, G06F 16/2452

(54) **INVOCATION OF DATASTORE STRUCTURES OF A NETWORK WITH NATURAL LANGUAGE QUERY**

(30) Priority: 06.05.2025 US 202563800769 P; 24.04.2026 US 202619658006
(71) Applicant: Juniper Networks, Inc., Sunnyvale, CA 94089-1206 (US)
(72) Inventor: MIRIYALA, Prasad, Sunnyvale, 94089 (US); MANSI, Joshi, Sunnyvale, 94089 (US); MANE, Sayali, Sunnyvale, 94089 (US); SCHMIDT, Carson Samuel Edward, Sunnyvale, 94089 (US); BOONKONGCHUEN, Kanyarin, Sunnyvale, 94089 (US); WU, Xiaoying, Sunnyvale, 94089 (US); ESHGHI, Amin Toghi, Sunnyvale, 94089 (US); KWON, Minji, Sunnyvale, 94089 (US); KUMAR, Neeraj, Sunnyvale, 94089 (US)
(74) Representative: Marks & Clerk LLP

(57) **Abstract**

Techniques are disclosed for performing queries upon network systems having multiple datastores of various different schemas based on a natural language query. In an example, a system receives a natural language query about a computer network. Multiple datastore structures include information descriptive of the computer network, and each datastore structure implements one of multiple different schemas. The system provides, to an artificial intelligence (AI) model, the natural language query to obtain queries to corresponding ones of the multiple datastore structures. The system queries the multiple datastore structures with the corresponding queries to obtain information descriptive of the computer network. The system provides the information descriptive of the computer network to the AI model to obtain a natural language response to the natural language query for outputting to an output device.

## Description

This application claims the benefit of U.S. Provisional Application No. 63/800,769 which was filed on May 6, 2025, and U.S. Application No. 19/658,006 which was filed on April 24,2026, the entire content of each of which is incorporated herein by reference.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication.

### SUMMARY

Particular aspects are set out in the appended independent claims. Various optional embodiments are set out in the dependent claims.

### BRIEF DESCRIPTION OF DRAWINGS

FIG. 1 is a block diagram illustrating an example network system including a conversational assistant, in accordance with one or more aspects of the techniques described in this disclosure.
FIG. 2 is a block diagram illustrating a system in accordance with aspects of the disclosure.
FIG. 3 is a block diagram illustrating a root cause analysis pipeline, in accordance with aspects of the disclosure.
FIG. 4 is a block diagram illustrating an example computing system, in accordance with the techniques described in this disclosure.
FIG. 5 is a flowchart illustrating an example operation in accordance with the techniques described in this disclosure.
FIG. 6 is a flowchart illustrating a first example implementation of a conversational assistant agent that employs an artificial intelligence (AI) model to answer natural language queries from a user about a network using a datastore that stores information about the network, in accordance with techniques of the disclosure.
FIG. 7 is a flowchart illustrating a second example implementation of a conversational assistant agent that employs an artificial intelligence (AI) model to answer natural language queries from a user about a network using a datastore that stores information about the network, in accordance with techniques of the disclosure.

Like reference characters refer to like elements throughout the figures and description.

### DETAILED DESCRIPTION

Techniques are disclosed for a conversational assistant that employs an artificial intelligence (AI) model, such as a large language model (LLM), to answer natural language queries from a user about a computer network using multiple datastores that store information about the network, the multiple datastores implementing various different schemas. For example, a system as described herein receives a natural language query about a computer network from a user device. Typically, the user query may be a complex, multi-step query that may use information drawn from multiple different datastore structures implementing different schemas to generate an answer.

Multiple datastore structures include information descriptive of the network. Such multiple datastore structures may include, for example, elastic search (ES) datastore structures and/or Structured Query Language (SQL) datastore structures. In some examples, each datastore is a different table that implements a different schema (or "index").

Where generation of an answer to a query draws from information spanning multiple datastore structures that employ different schemas, conversational assistant systems that do not employ the techniques of the disclosure may have difficulty generating useful or accurate answers to natural language queries. For example, such conversational assistant systems that do not employ the techniques of the disclosure may be trained to generate a query to a first datastore structure implementing a first schema, but may be untrained for generating a query to a second datastore structure implementing a second, different schema. An answer to a query may rely upon information spanning both the first datastore structure and the second datastore structure. In addition, a prompt to the second datastore structure may depend on information obtained from the first datastore structure. Such conversational assistant systems that do not employ the techniques of the disclosure may be trained to access a single datastore structure, and so may be unable to access both the first and second datastore structures, and therefore may be unable to generate a helpful or accurate response. Therefore, such conversational assistant systems that do not employ the techniques of the disclosure may be unable to generate answers to natural language queries that include complex, multi-step questions that span multiple datastore structures of different schemas.

Using the techniques of the disclosure, a system as described herein provides, to an artificial intelligence (AI) model, the natural language query. In some examples, the Al model comprises an LLM or other generative Al model, and optionally may implement Retrieval-Augmented Generation (RAG) to respond to natural language queries. In some examples, the Al model is trained with sets of model datastore queries and corresponding answers, each set of the model datastore queries and answers corresponding to a different datastore structure of the plurality of datastore structures. In some examples, the Al model may also generate natural language queries from each schema. In some examples, developers may write natural language queries relevant to a particular schema. As discussed below, the Al model may use these generated natural language queries to select a schema relevant to a user query.

The system obtains, from the Al model and in response to the natural language query: (i) a selection of one or more datastore structures of the multiple datastore structures; (ii) a selection of a schema of multiple schemas that may be used with a corresponding one of the selected one or more datastore structures; and (iii) one or more queries to be provided to a corresponding datastore structure of the selected one or more datastore structures, each of the one or more queries adhering to a corresponding schema selected for use with the corresponding datastore structure.

The system queries the one or more datastore structures with the corresponding one or more queries to obtain information descriptive of the computer network. The system provides the information descriptive of the network to the Al model to obtain a natural language response to the natural language query. The natural language response describes, for example, a current or future status, configuration, and/or state of the computer network, or other information about the computer network. The computing system outputs the natural language response to an output device, such as a display device, an audio device, or the user device, for output to a user associated with the user device.

The techniques of the disclosure may provide specific improvements to the computer-related field of computer networking, and more particularly, to administration, maintenance, orchestration, trouble-shooting, diagnostics, root-cause identification, and failure analysis of computer networks. For example, based on a natural language query about a network from a user, the techniques of the disclosure may enable a computing system to identify specific datastores that may include information relevant to answering the query from the many different datastores that may store information for the network. Moreover, the techniques of the disclosure may enable a computing system to automatically create queries to the datastores identified as having information relevant to answering the query, even where the many different datastores implement different schemas for storing or organizing the data. In addition, the techniques of the disclosure may enable such a computing system to synthesize the resultant information obtained from multiple queries to the different datastores into a natural language response understandable by a human user. Therefore, such a computing system as described herein may reduce the technical expertise to perform oversight, orchestration, and management of complex computer networks that do not use the techniques of the disclosure may otherwise rely upon expertise specific to each different datastore. Moreover, such a computing system as described herein may reduce the complexity of root cause identification and failure analysis of complex computer networks involving many different datastores of different schemas, and therefore may reduce the time and effort to perform troubleshooting and remediation of current, real-time, or predicted failures or degradations within such networks.

The techniques of the disclosure may drive demand for a number of products and services. For example, the techniques of the disclosure may enhance network infrastructure and hardware, such as high-throughput routers, core and edge switches, Wi-Fi 6/7 access points, and fiber optic cabling. As another example, the techniques of the disclosure may enhance cybersecurity solutions, such as Next-Generation Firewalls (NGFW), Security Information and Event Management (SIEM) software, Network Access Control (NAC), and Endpoint Detection and Response (EDR) tools. As another example, the techniques of the disclosure may enhance ISP and connectivity services, such as higher-tier ISP bandwidth circuits, SD-WAN (Software-Defined Wide Area Network) solutions, and redundant/failover connections (like 5G backup). As another example, the techniques of the disclosure may enhance IT Service Management (ITSM) and automation, such as Ticketing and helpdesk and IT automation platforms. As another example, the techniques of the disclosure may enhance cloud infrastructure and storage, such as cloud computing instances, scalable cloud storage, and cloud migration services. As another example, the techniques of the disclosure may enhance physical infrastructure and power, such as Uninterruptible Power Supplies (UPS), intelligent Power Distribution Units (PDUs), and environmental/temperature sensors.

The details of one or more examples of the techniques of this disclosure are set forth in the accompanying drawings and the description below. Other features, objects, and advantages of the techniques will be apparent from the description and drawings, and from the claims.

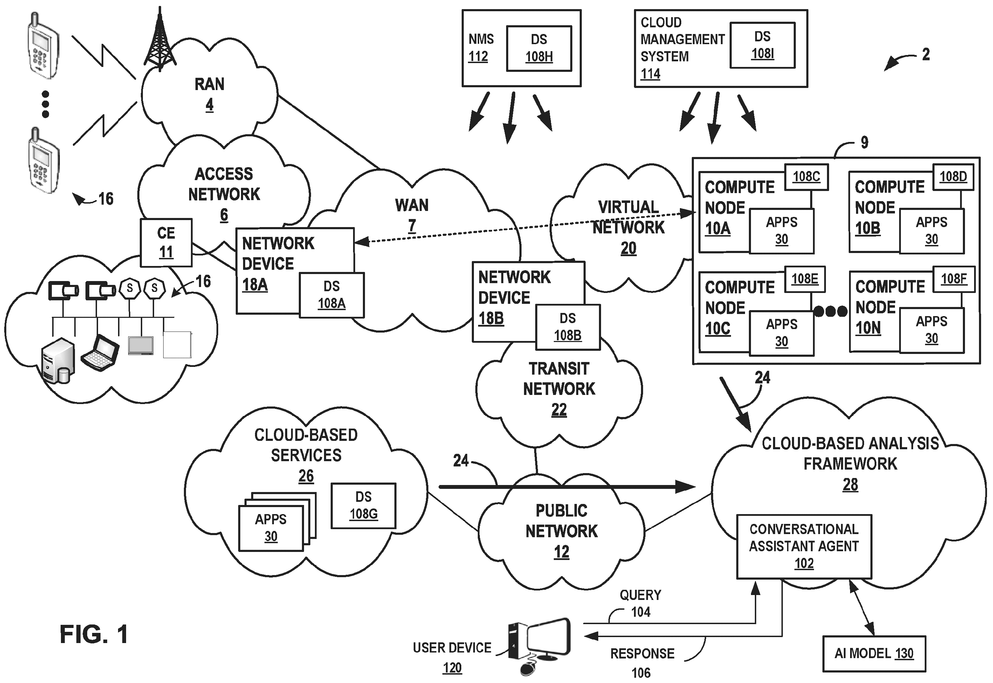

FIG. 1 is a block diagram illustrating an example cloud-based analysis framework, in accordance with one or more aspects of the techniques described in this disclosure. Network system 2 may provide packet-based network services to subscriber devices 16. That is, network system 2 may provide authentication and establishment of network access for subscriber devices 16 such that a subscriber device may begin exchanging data packets with public network 12, which may be an internal or external packet-based network such as the Internet.

In the example of FIG. 1, network system 2 comprises access network 6 that provides connectivity to public network 12 via wide area network 7 (hereinafter, "WAN 7"). WAN 7 and public network 12 may provide packet-based services that are available for request and use by subscriber devices 16. As examples, WAN 7 and/or public network 12 may provide bulk data delivery, voice over Internet protocol (VoIP), Internet Protocol television (IPTV), Short Messaging Service (SMS), Wireless Application Protocol (WAP) service, or customer-specific application services. Public network 12 may comprise, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates access network 6, an enterprise IP network, or some combination thereof. In various examples, public network 12 is connected to a public WAN, the Internet, or to other networks. Public network 12 executes one or more packet data protocols (PDPs), such as IP (IPv4 and/or IPv6), X.25 or Point-to-Point Protocol (PPP), to enable packet-based transport of public network 12 services.

In general, subscriber devices 16 connect to network devices 18A-18B (collectively, "network devices 18") via access network 6 to receive connectivity to subscriber services for applications hosted by public network 12. A subscriber may represent, for instance, an enterprise, a residential subscriber, or a mobile subscriber. Subscriber devices 16 may be, for example, personal computers, laptop computers or other types of computing devices positioned behind customer equipment (CE) 11, which may provide local routing and switching functions. Each of subscriber devices 16 may run a variety of software applications, such as word processing and other office support software, web browsing software, software to support voice calls, video games, video conferencing, and email, among others. For example, subscriber device 16 may be a variety of network-enabled devices, referred generally to as "Internet-of-Things" (IoT) devices, such as cameras, sensors (S), televisions, appliances, etc. In addition, subscriber devices 16 may comprise mobile devices that access the data services of network system 2 via a radio access network (RAN) 4. Example mobile subscriber devices include mobile telephones, laptop or desktop computers having, e.g., a wireless card, wireless-capable netbooks, tablets, video game devices, pagers, smart phones, personal data assistants (PDAs) or the like.

A network service provider operates, or in some cases leases, elements (e.g., network devices - not shown in the example of FIG. 1) of access network 6 to provide packet transport between subscriber devices 16 and network device 18A. Access network 6 represents a network that aggregates data traffic from one or more of subscriber devices 16 for transport to/from WAN 7 of the service provider. Access network 6 includes network nodes that execute communication protocols to transport control and user data to facilitate communication between subscriber devices 16 and network device 18A. Access network 6 may include a broadband access network, a wireless LAN, a public switched telephone network (PSTN), a customer premises equipment (CPE) network, or other type of access network, and may include or otherwise provide connectivity for cellular access networks, such as a radio access network (RAN), e.g., RAN 4. Examples of the RAN include networks conforming to a 5th Generation (5G) mobile network, 4th Generation (4G) mobile network Universal Mobile Telecommunications System (UMTS) architecture, an evolution of UMTS referred to as Long Term Evolution (LTE), 5G including enhanced mobile broadband, mobile IP standardized by the Internet Engineering Task Force (IETF), as well as other standards proposed by the 3rd Generation Partnership Project (3GPP), 3rd Generation Partnership Project 2 (3GGP/2) and the WiMAX forum.

Network device 18 may each be a customer edge (CE) router, a provider edge (PE) router, Software-defined Wide Area Network (SD-WAN) edge device, service device, network appliance, a server executing virtualized network functions, or other computing device that provides connectivity between networks, e.g., access network 6 and public network 12, or network services. WAN 7 offers packet-based connectivity to subscriber devices 16 attached to access network 6 for accessing public network 12 (e.g., the Internet). WAN 7 may represent a public network that is owned and operated by a service provider to interconnect a plurality of networks, which may include access network 6. In some examples, WAN 7 may implement Multi-Protocol Label Switching (MPLS) forwarding and in such instances may be referred to as an MPLS network or MPLS backbone. In some instances, WAN 7 represents a plurality of interconnected autonomous systems, such as the Internet, that offers services from one or more service providers. Public network 12 may represent the Internet. Public network 12 may represent an edge network coupled to WAN 7 via a transit network 22 and one or more network devices, e.g., a customer edge device such as customer edge switch or router. Public network 12 may include a data center. In the example of FIG. 1, network device 18B may exchange packets with compute nodes 10A-10D ("compute nodes 10") via virtual network 20, and network device 18B may forward packets to public network 12 via transit network 22.

In examples of network system 2 that include a wireline/broadband access network, network devices 18A or 18B may represent a Broadband Network Gateway (BNG), Broadband Remote Access Server (BRAS), MPLS PE router, core router or gateway, or Cable Modem Termination System (CMTS). In examples of network system 2 that include a cellular access network as access network 6, network devices 18A or 18B may represent a mobile gateway, for example, a Gateway General Packet Radio Service (GPRS) Serving Node (GGSN), an Access Gateway (aGW), or a Packet Data Network (PDN) Gateway (PGW). In other examples, the functionality described with respect to network device 18B may be implemented in a switch, service card or another network element or component. In some examples, network device 18B may itself be a compute node.

A network service provider that administers at least parts of network system 2 typically offers services to subscribers associated with devices, e.g., subscriber devices 16, that access network system 2. Services offered may include, for example, traditional Internet access, VoIP, video and multimedia services, and security services. As described above with respect to WAN 7, WAN 7 may support multiple types of access network infrastructures that connect to service provider network access gateways to provide access to the offered services, e.g., service provided by compute node 10. In some instances, the network system may include subscriber devices 16 that attach to multiple different access networks 6 having varying architectures.

In general, any one or more of subscriber devices 16 may request authorization and data services by sending a session request to a gateway device such as network devices 18A or 18B. In turn, the network device may access a central server (not shown) such as an Authentication, Authorization and Accounting (AAA) server to authenticate the one of subscriber devices 16 requesting network access. Once authenticated, any of subscriber devices 16 may send subscriber data traffic toward WAN 7 to access and receive services provided by public network 12, and such packets may traverse network devices 18A or 18B as part of at least one packet flow. In some examples, network device 18A may forward all authenticated subscriber traffic to public network 12, and network device 18B may apply services and/or steer particular subscriber traffic to data center 9 if services on compute nodes 10 are to be applied to the subscriber traffic. Service applications to be applied to the subscriber traffic may be hosted on compute nodes 10.

For example, network system 2 includes a data center 9 having a cluster of compute nodes 10 that provide an execution environment for the virtualized network services. In some examples, each of compute nodes 10 represents a service instance. Each of compute nodes 10 may apply one or more services to traffic flows. As such, network device 18B may steer subscriber packet flows through defined sets of services provided by compute nodes 10. That is, in some examples, each subscriber packet flow may be forwarded through a particular ordered combination of services provided by compute nodes 10, each ordered set being referred to herein as a "service chain." As examples, compute nodes 10 may apply stateful firewall (SFW) and security services, deep packet inspection (DPI), carrier grade network address translation (CGNAT), traffic destination function (TDF) services, media (voice/video) optimization, Internet Protocol security (IPSec)/virtual private network (VPN) services, hypertext transfer protocol (HTTP) filtering, counting, accounting, charging, and/or load balancing of packet flows, or other types of services applied to network traffic.

In some examples, network system 2 comprises a software defined network (SDN) and network functions virtualization (NFV) architecture. In these examples, an SDN controller (not shown) may provide a controller for configuring and managing the routing and switching infrastructure of network system 2.

Although illustrated as part of data center 9, compute nodes 10 may be network devices coupled by one or more switches or virtual switches of WAN 7. In one example, each of compute nodes 10 may run as virtual machines (VMs) in a virtual compute environment. Moreover, the compute environment may comprise a scalable cluster of general computing devices, such as x86 processor-based services. As another example, compute nodes 10 may comprise a combination of general-purpose computing devices and special-purpose appliances. As virtualized network services, individual network services provided by compute nodes 10 can scale just as in a modern data center through the allocation of virtualized memory, processor utilization, storage and network policies, as well as horizontally by adding additional load balanced VMs. In other examples, compute nodes 10 may be gateway devices or other routers. In further examples, the functionality described with respect to each of compute nodes 10 may be implemented in a switch, service card, or another network element or component.

Subscriber devices 16 may be configured to utilize the services provided by one or more of applications 30 hosted on servers that are part of cloud-based services 26. In some aspects, cloud-based services 26 may be provided from one or more datacenters, including datacenter 9 by way of compute nodes 10. An application 30 may be configured to provide a single service, or it may be configured as multiple microservices. For purposes of illustration, it is assumed that application 30 is configured as multiple microservices. A subscriber device 16 can utilize the services of an application 30 by communicating requests to the application 30 and receiving responses from the application 30 via public network 12. In some aspects, applications 30 may be containerized applications (or microservices). Containerization is a virtualization scheme based on operating system-level virtualization. Containers are light-weight and portable execution elements for applications that are isolated from one another and from the host. Such isolated systems represent containers, such as those provided by the open-source DOCKER Container application or by CoreOS Rkt ("Rocket"). Like a virtual machine, each container is virtualized and may remain isolated from the host machine and other containers. However, unlike a virtual machine, each container may omit an individual operating system and instead provide an application suite and application-specific libraries. In general, a container is executed by the host machine as an isolated user-space instance and may share an operating system and common libraries with other containers executing on the host machine. Thus, containers may use less processing power, storage, and network resources than virtual machines. A group of one or more containers may be configured to share one or more virtual network interfaces for communicating on corresponding virtual networks.

Because containers are not tightly-coupled to the host hardware computing environment, an application can be tied to a container image and executed as a single light-weight package on any host or virtual host that supports the underlying container architecture. As such, containers address the problem of how to make software work in different computing environments. Containers offer the promise of running consistently from one computing environment to another, virtual or physical.

In the example of FIG. 1, network management system (NMS) 112 is a cloud-based computing platform that manages one or more networks of subscriber devices 16, network devices 18 of WAN 7, transit network 22, virtual network 20, etc. In general, NMS 112 may provide a cloud-based platform for wireless network data acquisition, monitoring, activity logging, reporting, predictive analytics, network anomaly identification, and alert generation. In some examples, NMS 112 outputs notifications, such as alerts, alarms, graphical indicators on dashboards, log messages, text / SMS messages, email messages, and the like, and/or recommendations regarding wireless network issues to a site or network administrator ("admin") interacting with and/or operating user device 120. Additionally, in some examples, NMS 112 operates in response to configuration input received from the administrator interacting with and/or operating user device 120.

Cloud management system 114 is a cloud-based computing platform that provides management of cloud-based infrastructure of network system 2, such as cloud-based services 26, data center(s) 9, and/or cloud-based framework system 28. In general, cloud management system 114 may provide a cloud-based platform for wireless network data acquisition, monitoring, activity logging, reporting, predictive analytics, network anomaly identification, and alert generation. In some examples, cloud management system 114 outputs notifications, such as alerts, alarms, graphical indicators on dashboards, log messages, text / SMS messages, email messages, and the like, and/or recommendations regarding cloud-based infrastructure issues to a site or network administrator ("admin") interacting with and/or operating user device 120. Additionally, in some examples, cloud management system 114 operates in response to configuration input received from the administrator interacting with and/or operating user device 120.

As described herein, computing devices within network system 2 may provide network monitoring services. For example, network devices 18 and/or compute nodes 10 are configured as measurement points (e.g., with Application Programming Interfaces (APIs) to access and configure datastores) to provide network monitoring services to determine, for example, network performance and functionality, as well as interconnections of service chains. APIs may be invoked to configure datastores to store and provide telemetry data (e.g., in the form of timeseries data, which may also be referred to as "time series data") that can be used to determine health of some or all of the network. APIs may be implemented as plugin applications provided as part of a cloud as a Software-as-a-Service (SaaS) solution, software deployed on premises in NFV environments, software applications installed to host computing devices, or other implementations. Computing devices configured with APIs and corresponding datastores may send and/or receive test packets to compute one or more key performance indicators (KPIs) of the network, such as latency, delay (inter frame gap), jitter, packet loss, throughput, and the like. APIs on compute nodes may be invoked to calculate KPIs related to resource utilization, such as CPU utilization, memory utilization, etc.

In the example of FIG. 1, network device 18A is configured with an API for accessing datastore structure 108A ("DS 108A"), network device 18B is configured with an API for accessing DS 108B, compute node 10A is configured with an API for accessing DS 108C, compute node 10B is configured with an API for accessing DS 108D, compute node 10C is configured with an API for accessing DS 108E, compute node 10N is configured with an API for accessing DS 108F, at least one application 30 of cloud-based services 26 is configured with an API for accessing DS 108G, NMS 112 is configured with an API for accessing DS 108H, and cloud management system 114 is configured with an API for accessing DS 108I (collectively, "datastore structures 108"). Although each of network devices 18 and compute nodes 10 are described as being configured with an API and datastore, any number of network devices and/or compute nodes may be configured with APIs and datastores to provide monitoring services, telemetry, configuration services, etc. APIs can access datastore structures 108 to produce and/or collect performance data (e.g., KPIs) regarding application and network performance, provide a mechanism for configuring such applications and networks, and expose access or enable the invocation of various diagnostic, configuration, or analytic tools for the corresponding element of network system 2. In some examples, APIs expose one or more tools for administration, orchestration, management, or configuration of the corresponding element of network system 2. In some examples, APIs presents an interface by which to obtain, from datastore structures 108 configuration, state, performance, performance monitoring, telemetry, or other data that describes the operation of a system of network system 2.

Datastore structures 108 (also referred to herein as "datastore structures 108") store information about the corresponding components of network system 2. In some examples, datastore structures 108 may store such information in the form of time-series data. Each datastore structure 108 may employ a different schema. For example, each datastore structure 108 may store different types of data, store such data in different formats, and accept different parameters and inputs as well as generate different outputs according to different formats. In some examples, one or more of datastore structures 108 are ES datastores of various different schemas. In some examples, one or more of datastore structures 108 are SQL datastores of various different schemas. In some examples, datastore structures 108 may be any combination of ES datastores, SQL datastores, graph databases, or other types of datastore structures or datastores.

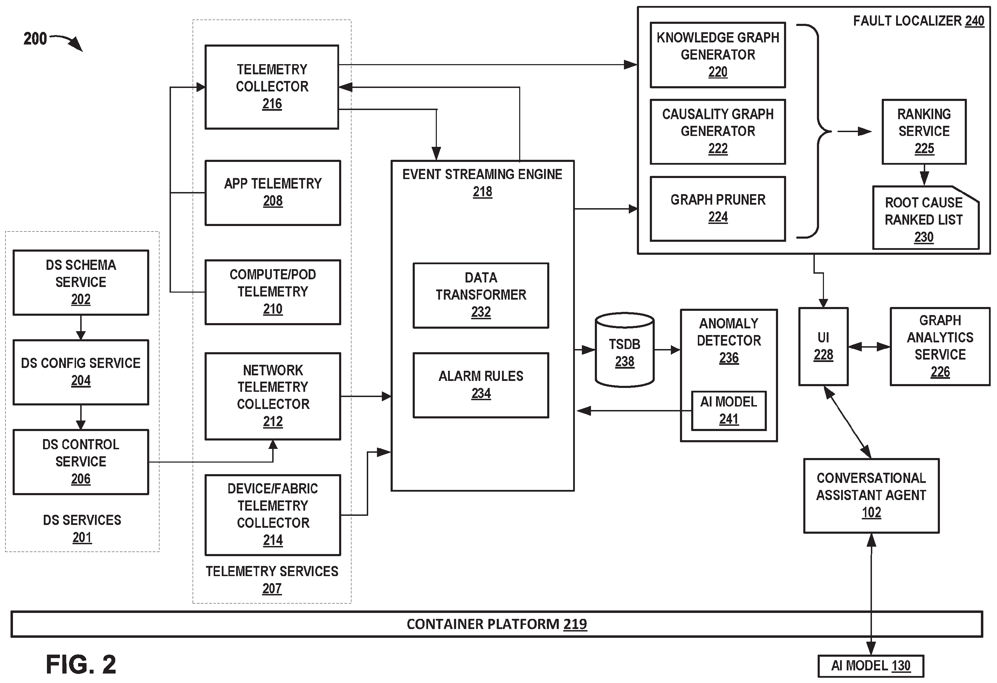

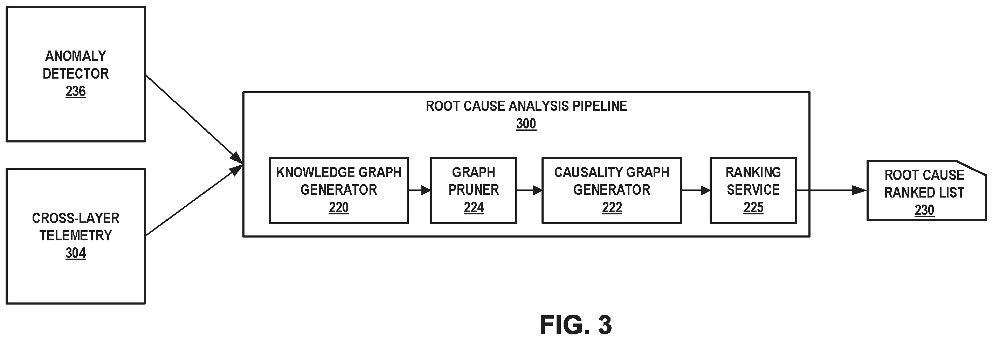

APIs and other devices and services may access datastore structures 108 to send KPIs 24 to cloud-based analysis framework system 28 as a time series data. Cloud-based analysis framework system 28 can receive KPIs and other data from datastore structures 108, and use the received data to detect anomalies in network and/or compute node operation. In some aspects, cloud-based analysis framework system 28 can be implemented, at least in part, as a containerized framework system. Further details on the processing of the time series of data are provided below with respect to FIGS. 2 and 3.

In accordance with the techniques of the disclosure, system 2 includes conversational assistant agent 102, which performs queries upon network system 2 having multiple datastores 108 of various different schemas based on a natural language query 104. In the example of FIG. 1, each of datastore structures 108 includes information descriptive of network system 2, and each datastore structure 108 implements a different schema of a plurality of different schemas.

As an example of the techniques of the disclosure, conversational assistant agent 102 receives natural language query 104 about network system 2 from user device 120. Conversational assistant agent 102 provides, to Al model 130, natural language query 104 to obtain one or more queries to one or more corresponding datastore structures 108. In some examples, Al model 130 comprises an LLM, a small language model (SLM), a long short-term memory (LSTM) model, or another type of generative Al model, neural network, machine learning model, deep learning model, etc. In some optional examples, a RAG framework guides Al model 130. Conversational assistant agent 102 queries the one or more datastore structures 108 with the corresponding one or more queries to obtain information descriptive of the network. Conversational assistant agent 102 provides the information descriptive of the network to Al model 130 to obtain natural language response 106 to natural language query 104. Conversational assistant agent 102 outputs, to an output device, natural language response 106. In some examples, the output device is user device 120, a display device, an audio output device, etc.

In some examples, cloud-based analysis framework system 28, conversational assistant agent 102, or portions thereof, may be offered as-a-Service (e.g., a cloud-based analysis framework-aaS or assistant agent-aaS). In such implementations, all or a portion of cloud-based analysis framework system 28 and/or conversational assistant agent 102 may be hosted on one or more servers of, e.g., a cloud service provider network, and a cloud service provider may license the functionality or features of cloud-based analysis framework system 28 and/or conversational assistant agent 102 on a subscription basis to a customer or enterprise, such as an operator of one or more of cloud-based services 26, data center 9, WAN 7, access network 6, transit network 22, CE 11, or subscriber devices 16.

FIG. 2 is a block diagram illustrating system 200 in accordance with one or more aspects of the disclosure. System 200 can be implemented as part of cloud-based analysis framework system 28 (FIG. 1). In some aspects, system 200 includes datastore (DS) services 201, telemetry services 207, telemetry collector 216, event streaming engine 218, and fault localizer 240.

DS services 201 include services that create, configure, invoke, and/or control APIs that interact with datastore structures 108 of FIG. 1 to collect KPIs or network telemetry data (e.g., datastore structures 108 of FIG. 1). In some aspects, DS services 201 can include DS schema service 202, DS configuration service 204 and DS control service 206. DS schema service 202 analyzes a datastore configuration, such as a network configuration, and can determine a schema employed by a datastore structure 108 of particular devices or types of devices (both physical and virtual) that may be present in network system 2.

DS configuration service 204 can configure datastore structures 108 based at least in part on a schema determined by DS schema service 202. DS control service 206 can invoke APIs to interact with datastores and monitor such invocation of APIs and interactions with datastore structures 108.

DS schema service 202 is responsible for determining a set of schemas that need to be used to interact with a given datastore structure 108, which may be determined based on a topology and configuration of a corresponding datastore structure 108 in network system 2. DS schema service 202 can receive a topology and configuration as an input, and can determine one or more schemas that can be used to interface with a particular datastore structure 108.

Depending on the environment, schemas for different types of datastore structures 108 may need to be used. For example, different datastore structures 108 may store and output data in different formats, and APIs corresponding to those datastore structures 108 may accept parameters or invocations in different manners. Moreover, there are different types of topologies, e.g., underlay network, overlay network, Kubernetes Clusters, etc., for which datastore structures 108 may store and access data. Depending on the topology, different schemas may be supported while considering datastore needs, configuration, and cost.

Telemetry services 207 includes services that collect telemetry from datastore structures 108 across multiple layers of networked system such as system 2 of FIG. 1. As used herein, a layer can refer to a set of components (real or virtual) that use resources and services provided by another set of components at a different layer. In cases where a first component uses resources or services of a second component, the first component can be said to be dependent on the second component. For example, applications at an application layer may use resources and services of a compute node at a compute node layer. The compute node layer may, in turn, use resources and services provided by network devices at a network layer, and so on. Thus, applications at the application layer are dependent on compute nodes at a compute node layer, which in turn, may be dependent on physical network devices at the physical layer.

In some aspects, telemetry services 207 include telemetry collector 216, network telemetry collector 212, and device/fabric telemetry collector 214. Telemetry collector 216 can collect application telemetry 208 such as application performance data. Application telemetry may be collected using service-mesh, Istio, etc. Telemetry collector 216 can also collect compute/pod telemetry 210. Compute/pod telemetry 210 can include Kubernetes pod and node performance telemetry data such as central processor unit (CPU) usage, memory usage, network statistics, etc. In some aspects, network telemetry collector 212 can be implemented using the Prometheus monitoring system combined with the Thanos high availability and data storage systems. Both Prometheus and Thanos are open source components.

Network telemetry collector 212 can collect telemetry data that measure endto-end network performance. For example, network telemetry collector 212 can collect network performance measurements obtained from datastore structures 108. Device/fabric telemetry collector 214 can collect telemetry data from network devices in a network fabric of network system 2 (e.g., network devices 18).

Event streaming engine 218 can receive telemetry data collected by telemetry services 207 such as telemetry collector 216, network telemetry collector 212, device/fabric telemetry collector 214 and others, and can store the data as time series data in time series database (TSDB) 238. The data received from telemetry services 207 may be in different formats depending on the source of the telemetry data and the collector used to collect the telemetry data. In some aspects, data transformer 232 apply data transforms to input data to normalize the data and/or to put the data into a standardized format. In some aspects, the data is transformed to an openTSDB format. In some aspects, event streaming engine 218 may be implemented, at least in part, using the Kafka stream processing system.

Event streaming engine may apply alarm rules 234 to the incoming telemetry data. Alarm rules 234 can be a set of one or more rules that indicate telemetry values that are anomalous, e.g., outside of desired ranges, over or under limits, etc.

Anomaly detector 236 can apply Al model 241 to time series of telemetry data from TSDB 238 to determine anomalous conditions related to the time series of telemetry data. In some aspects, Al model 241 can be trained using supervised or unsupervised learning techniques to discover relationships between KPIs in telemetry data and anomalous conditions within one or more layers of a multi-layered network system such as system 2 of FIG. 1. These relationships can be across multiple layers of the network model. For example, KPIs that are associated with a network device can be related to KPIs of an application that utilizes the network device to communicate with another service. As an example, KPIs that indicate a bottleneck at a network device or CPU overload on a host device can affect response time KPIs of an application that runs on the host and/or utilizes the network device for communication with another endpoint in the network.

Telemetry services 207 includes services that collect telemetry from datastore structures 108 across multiple layers of networked system such as system 2 of FIG. 1. As used herein, a layer can refer to a set of components (real or virtual) that use resources and services provided by another set of components at a different layer. In cases where a first component uses resources or services of a second component, the first component can be said to be dependent on the second component. For example, applications at an application layer may use resources and services of a compute node at a compute node layer. The compute node layer may, in turn, use resources and services provided by network devices at a network layer, and so on. Thus, applications at the application layer are dependent on compute nodes at a compute node layer, which in turn, may be dependent on physical network devices (e.g., compute nodes 10 shown in the example of FIG. 1) at the network physical layer.

In some aspects, telemetry services 207 include telemetry collector 216, network telemetry collector 212, and device/fabric telemetry collector 214. Telemetry collector 216 can collect application telemetry 208 such as application performance data. Application telemetry may be collected using service-mesh, Istio, etc. Telemetry collector 216 can also collect compute/pod telemetry 210. Compute/pod telemetry 210 can include Kubernetes pod and node performance telemetry data such as central processor unit (CPU) usage, memory usage, network statistics, etc. In some aspects, network telemetry collector 212 can be implemented using the Prometheus monitoring system combined with the Thanos high availability and data storage systems. Both Prometheus and Thanos are open source components.

Network telemetry collector 212 can collect telemetry data that measure endto-end network performance. For example, network telemetry collector 212 can collect network performance measurements obtained from datastore structures 108.

Device/fabric telemetry collector 214 can collect telemetry data from network devices in a network fabric of network system 2 (e.g., network devices 18).

Event streaming engine 218 can receive telemetry data collected by telemetry services 207 such as telemetry collector 216, network telemetry collector 212, device/fabric telemetry collector 214 and others, and can store the data as time series data in TSDB 238. The data received from telemetry services 207 may be in different formats depending on the source of the telemetry data and the collector used to collect the telemetry data. In some aspects, data transformer 232 apply data transforms to input data to normalize the data and/or to put the data into a standardized format. In some aspects, the data is transformed to an openTSDB format. In some aspects, event streaming engine 218 may be implemented, at least in part, using the Kafka stream processing system.

Event streaming engine may apply alarm rules 234 to the incoming telemetry data. Alarm rules 234 may represent a set of one or more rules that indicate telemetry values that are anomalous, e.g., outside of desired ranges, over or under limits, etc.

Anomaly detector 236 can apply Al model 241 to time series of telemetry data from TSDB 238 to determine anomalous conditions related to the time series of telemetry data. In some aspects, Al model 241 can be trained using supervised or unsupervised learning techniques to discover relationships between KPIs in telemetry data and anomalous conditions within one or more layers of a multi-layered network system such as system 2 of FIG. 1. These relationships can be across multiple layers of the network model. For example, KPIs that are associated with a network device can be related to KPIs of an application that utilizes the network device to communicate with another service. As an example, KPIs that indicate a bottleneck at a network device or CPU overload on a host device can affect response time KPIs of an application that runs on the host and/or utilizes the network device for communication with another endpoint in the network.

Anomaly detector 236 may invoke fault localizer 240 when a fault (e.g., an anomalous condition) is detected using alarm rules or detected using Al model 241. In some aspects, fault localizer 240 includes knowledge graph generator 220, causality graph generator 222, graph pruner 224 and ranking service 225. In some aspects, knowledge graph generator 220, causality graph generator 222, graph pruner 224, and ranking service 225 may be executed as part of a root cause analysis pipeline, an example of which is shown in FIG. 3.

Knowledge graph generator 220 can generate, based on data in TSDB 238 and relationships discovered in Al model 241, dependencies between different application and infrastructure entities of network system 2. Causality graph generator 222 generates further graph data on top of a knowledge graph generated by knowledge graph generator 220 to form a causality graph. The causality graph captures causal relationships between different performance KPIs and anomalous conditions. Graph pruner 224 prunes the knowledge graph and causality graph to determine a subset of the graphs to be used in root cause localization. Ranking service 225 ranks the nodes in the causality graph to form root cause ranked list 230 and to indicate the nodes that are likely to be the root cause of an observed anomaly in the order of likelihood that the node caused the anomaly.

System 200 may further include graph analytics service 226 and user interface (UI) 228. Graph analytics service 226 can receive graph queries on the knowledge and causality graph for further investigation and validation of fault localization results. In some aspects, graph analytics service 226 can be used to perform alarm propagation path analysis, graph change analysis, fault injection analysis, or application-to-network mapping analysis. UI 228 may present information related to the fault localization results and analysis by graph analytics service 226.

In accordance with the techniques of the disclosure, system 200 further includes conversational assistant agent 102, which performs queries upon network system 2 having multiple datastores 108 of various different schemas based on a natural language query 104. Conversational assistant agent 102 receives natural language query 104 about network system 2 from user device 120. Conversational assistant agent 102 provides, to Al model 130, natural language query 104 to obtain one or more queries to one or more corresponding datastore structures 108.

In some examples, container platform 219 executes one or more aspects of system 200, including cloud-based analysis framework 28 (FIG. 1) and conversational assistant agent 102. In some examples, one or more servers or compute nodes of a data center, such as data center 9 (FIG. 1) executes container platform 219. In some examples, container platform 219 provides interconnectivity between conversational assistant agent 102 and Al model 130, which may be hosted by one or more servers of a third party, such as a clod-based services provider.

In some examples, Al model 130 comprises an LLM, an SLM, an LSTM model, or another type of generative Al model, neural network, machine learning model, deep learning model, etc. In some optional examples, a RAG framework guides Al model 130. For example, a RAG framework stores supplemental data which may be specific to a domain for which Al model 130 receives user queries. The supplemental data may include, e.g., one or more databases or datastores, one or more documents, such as technical documents and specifications, user query and response history, technical support or quality control information, API documentation, etc. The domain of the RAG framework may be, e.g., a particular enterprise, technical environment, or context for a user's query. This supplemental data is loaded, indexed, and stored within the RAG framework. Upon receiving natural language query 104, the RAG framework filters the supplemental data into a relevant set of contextual data based upon natural language query 104. Conversational assistant agent 102 provides, to Al model 130, natural language query 104 and the filtered contextual data from the RAG framework. The use of a RAG framework may increase the accuracy of Al model 130 in providing responses that are relevant to natural language query 104, and may enable a generic Al model 130 to provide enhanced relevancy and accuracy for context-specific implementations, such as conversational assistants or technical support agents for an enterprise.

In some examples, conversational assistant agent 102 may use Al model 130 to select a datastore structure 108 for use in obtaining information to respond to natural language query 104. For example, conversational assistant agent 102 provides, to Al model 130, natural language query 104 to obtain a selection of one or more datastore structures 108. Conversational assistant agent 102 provides, to Al model 130, natural language query 104 and the selected one or more datastore structures 108 to obtain the one or more queries to the one or more corresponding datastore structures 108.

In some examples, conversational assistant agent 102 may use Al model 130 to select a schema for use with a datastore structure 108. For example, conversational assistant agent 102 provides, to Al model 130, natural language query 104 to obtain a selection of one or more schemas corresponding to the one or more datastore structures 108. Conversational assistant agent 102 provides, to Al model 130, natural language query 104 and the selected one or more schemas to obtain, for each schema of the one or more schemas, a query to a corresponding datastore structure 108 of the one or more datastore structures 108 corresponding to the schema.

In some examples, natural language query 104 may be a complex, multi-step natural language query. In such an example, conversational assistant agent 102 provides, to Al model 130, the multi-step natural language query to obtain a plurality of single-step natural language queries. Then, for each single-step natural language query of the plurality of single-step natural language queries, conversational assistant agent 102 provides, to Al model 130, the single-step natural language query to obtain a query to a corresponding datastore structure 108. In this fashion, conversational assistant agent 102 may use Al model 130 to break down a complex, multi-step query into multiple simple queries, each of which may be processed into queries for corresponding datastore structures 108.

For example, conversational assistant agent 102 provides, to Al model 130 e.g., GPT-4o or GPT-4o-mini), guided via a first Retrieval-Augmented Generation (RAG) (e.g., LlamaIndex RAG), to natural language query 104 to obtain one or more simplified queries. In some examples, trained Al model 130 implements "aliasing" to convert terms or phrases within natural language query 104 to equivalent terms or phrases within the one or more simplified queries having a similar meaning. For instance, a RAG pipeline (e.g., LlamaIndex RAG) may leverage external information to enhance responses from trained Al model 130. The RAG pipeline may obtain respective schemas for datastore structures 108, information descriptive of datastore structures 108, information descriptive of different systems for managing or implementing network system 2 that may correspond to the different datastore structures 108 corresponding to respective systems and devices of network system 2 of FIG. 1), or other information usable for generating one or more simplified queries from natural language query 104. trained Al model 130 in such examples thus operates as a generation component in a RAG workflow orchestrated by the RAG pipeline, with the RAG pipeline feeding in the external information as context to trained Al model 130 to generate the one or more simplified queries.

In some examples, conversational assistant agent 102 provides Al model 130, guided via a second RAG (e.g., SetFit RAG), natural language query 104 to obtain a selection, for each of the one or more simplified queries, a corresponding schema for, e.g., an ES datastore structure of datastore structures 108. In some examples, Al model 130 uses the queries generated from the schemas by Al model 130 to select the schema corresponding to each simplified query. In addition or in the alternative, a developer may help Al model 130 select the schema corresponding to each simplified query. For example, for each pair of the one or more simplified queries and the selected schema, Al model 130 generates a query suitable for querying the corresponding ES datastore structure 108 of datastore structures 108. In some examples, Al model 130 parses natural language query 104 (or simplified queries) to extract relevant field information from natural language query 104 as part of generating the one or more queries. For example, Al model 130 may select one or more fields relevant to answering natural language query 104 and one or more specific values set forth in natural language query 104.

In some examples, conversational assistant agent 102 masks data fields prior to providing information to Al model 130 for generating the one or more queries to avoid sharing customer data. Upon receiving the one or more queries from Al model 130, conversational assistant agent 102 may then restore the data fields with the pertinent customer information.

Conversational assistant agent 102 queries the one or more datastore structures 108 with the corresponding one or more queries to obtain information descriptive of the network. In some examples, the information descriptive of the network comprises information descriptive of a current state of the network. In some examples, the information descriptive of the network comprises information descriptive of a future state of the network.

In some examples, conversational assistant agent 102 may use information obtained from a first query to a first datastore 1 structure 08 to parameterize a second query to a second datastore structure 108. For example, conversational assistant agent 102 queries a first datastore structure 108 with a first query of the one or more queries to obtain first information descriptive of network system 2. Conversational assistant agent 102 parameterizes a second query of the one or more queries with the first information descriptive of the network. Conversational assistant agent 102 queries a second datastore structure 108 with the parameterized second query to obtain second information descriptive of the network. In some examples, conversational assistant agent 102 may iteratively query the one or more datastore structures 108 with the corresponding one or more queries to obtain the information descriptive of the network.

Conversational assistant agent 102 provides the information descriptive of the network to Al model 130 to obtain natural language response 106 to natural language query 104. Conversational assistant agent 102 outputs, to an output device, natural language response 106. In some examples, the output device is user device 120, a display device, an audio output device, etc.

FIG. 3 shows a root cause analysis pipeline, in accordance with aspects of the disclosure. In some aspects, root cause analysis pipeline 300 includes knowledge graph generator 220, causality graph generator 222, graph pruner 224 and ranking service 225, each of which is described above with respect to the example of FIG. 2. Cross-layer telemetry is collected across multiple layers of the infrastructure from application to network (e.g., cloud-based analysis framework system 28 of FIG. 1) in the form of timeseries data. This telemetry includes performance metrics for different layers which reflects a health of the different components of the cloud-based analysis framework system 28. The telemetry can be collected and analyzed in real-time to automatically detect and troubleshoot anomalies and provide root causes of anomalies in a cloud-based analysis framework system 28.

Processing by root cause analysis pipeline 300 can be initiated when a performance anomaly is detected for a given application. For example, anomaly detector 236 may identify, using Al model 241, anomalies and supply information regarding the anomalies to root cause analysis pipeline 300 using cross-layer telemetry 304. As an example, cross-layer telemetry 304 can include application layer telemetry data, compute/pod layer telemetry data 608, network layer telemetry data, device layer telemetry data, fabric layer telemetry data etc. collected by any of telemetry collector 216, network telemetry collector 212 and/or device/fabric telemetry collector 214. Additionally, or instead, anomalies may be detected using rule-based anomaly detection and provided to root cause analysis pipeline 300.

As another example, root cause analysis pipeline 300 can be initiated upon request by a user, such as an administrator, responsive to natural language response 106 specifying a health of cloud-based analysis framework system 28 described in FIGS. 1-2 above. In addition, root cause analysis pipeline 300 can be initiated upon detection of one or more anomalies may be detected as a result of a monitoring task specified by a user via natural language query 104 described in FIGS. 1-2 above.

After an application performance issue is detected, knowledge graph generator 220 initiates creation of a knowledge graph from the real-time telemetry collected during the time period when the application anomaly is detected. As an example, if an application anomaly is detected at time T, then knowledge graph generator 220 can generate a knowledge graph for the entire infrastructure from application to network using cross-layer telemetry 304 for the past N time periods. Where N can be 5 minutes, 15 minutes, 30minutes, etc.

Telemetry for each layer is parsed to determine the nodes for each layer and their relationships with the neighboring nodes. Generally speaking, a node can represent any entity in a network system, whether physical, virtual, or software. As an example, a node may represent a device such as a network device, a computing device, a virtual device (e.g., virtual machine, virtual router, Virtual routing and forwarding (VRF), etc.), an application, a service, a microservice etc. For example, from the response time telemetry for micro services, caller and callee services can be identified from the labels that are present in the telemetry. Similarly, if an application is hosted on Kubernetes platform, then relationships between a microservice and its multiple instances can be determined from the pod level telemetry.

A knowledge graph generated by knowledge graph generator 220 can include multiple layers such as an Application layer, Pod Instance layer, Compute Node layer, Network Probe layer, and/or Network Fabric Layers. Depending on the environment, other layers in the knowledge graph can be defined and added. For an example, a root cause analysis framework system can be used to model the different components within a router/switch, where dependency of the ingress ports, ingress queues, fabric ports, egress ports, egress queues can be represented as a knowledge graph. System 200 can be extended to such environments.

Graph pruner 224 can prune a knowledge graph to a smaller set of nodes based on the anomalies. In some aspects, pruning is done so that those nodes within a threshold distance of a node exhibiting an anomaly are selected. As used herein, a distance between two nodes is the number of edges between the nodes in the graph. In some aspects, the threshold distance is one (1), resulting in selection of the node experiencing the anomaly and its immediate neighbors. Pruning the graph can result in a smaller graph over which further root cause analysis is performed.

Knowledge graph generator 220 can expose APIs for creation and processing of the knowledge graph. Causality graph generator 222 can create a causality graph based on the pruned knowledge graph. Each node in the pruned knowledge graph has set of distinct KPIs. Causality graph generator 222 can use the KPI to add nodes to the nodes of the pruned knowledge graph. The causality graph can be generated in various ways.

After causality graph generator 222 has generated a causality graph, ranking service 225 can analyze the graph and rank the most likely root causes of an anomaly. In some aspects, ranking service 225 uses a "PageRank" algorithm to rank the nodes in the causality graph. In the PageRank algorithm, the relevancy of webpage increases if other relevant webpages point to the given page. A similar analogy is used to rank the nodes in the causality graph, where node is likely to get higher score if it is being pointed by other nodes to be the root cause.

There are two modes in which a PageRank algorithm is used. In the first mode, a root cause can be determined for all service level anomalies observed in the causality graph. In the second mode, a personalized PageRank algorithm can be used that is focused on performing root cause analysis on a selected set of services or infrastructure components.

The techniques of FIG. 3 are described for root cause analysis of distributed microservice-based applications deployed in a data center network. However, the techniques of the disclosure may be adapted to other environments.

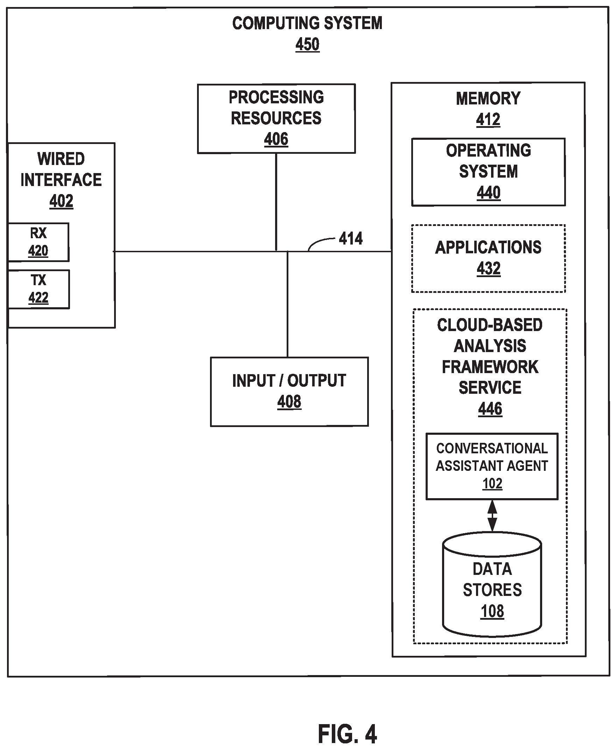

FIG. 4 is a block diagram illustrating an example computing system 450, in accordance with the techniques described in this disclosure. Computing system 450 of FIG. 4 may represent any of network devices 18, server hosting compute nodes 10, servers or other computing devices associated with applications 30 of FIG. 1, or servers or computing devices associated with conversational assistant agent 102 of FIGS 1 and 2.

In this example, computing system 450 includes a communications interface 402, e.g., an Ethernet interface, processing resources 406, input / output 408, e.g., display, buttons, keyboard, keypad, touch screen, mouse, etc., a memory 412 coupled together via a bus 414 over which the various elements may interchange data and information. Communications interface 402 couples the computing system 450 to a network, such as an enterprise network. Though one interface is shown by way of example, those skilled in the art should recognize that network nodes may, and usually do, have multiple communication interfaces. Communications interface 402 includes a receiver (RX) 420 via which computing system 450, e.g., a server, can receive data and information. Communications interface 402 includes a transmitter (TX) 422, via which computing system 450, e.g., a server, can send data and information.

Memory 412 stores executable operating system 440 and may, in various configurations, store instructions for software applications 432 and/or cloud-based framework service 446. For example, computing system 450 may be configured as a server that is part of cloud-based analysis framework system 28 of FIG. 1. In such configurations, software applications 432 may be an implementation of one or more of applications 30 of FIG. 1.

Computing system 450 may be configured as a server that is part of cloud-based analysis framework system 28. In such configurations, memory 412 may store one or more cloud-based analysis framework services 446 that communicate with or exchange data with cloud-based analysis framework system 28 of FIG. 1. Cloud-based analysis framework service 446 may be or include any combination of DS services 201, telemetry services 207, event streaming engine 218, fault localizer 240, graph analytics service 226, or anomaly detector 236 of FIG. 2.

Computing system 450 implements conversational assistant agent 102 and datastore structures 108 as software or a combination of software and hardware. Conversational assistant agent 102 and datastore structures 108 may be or include any combination of conversational assistant agent 102 and datastore structures 108 of FIGS. 1-2.

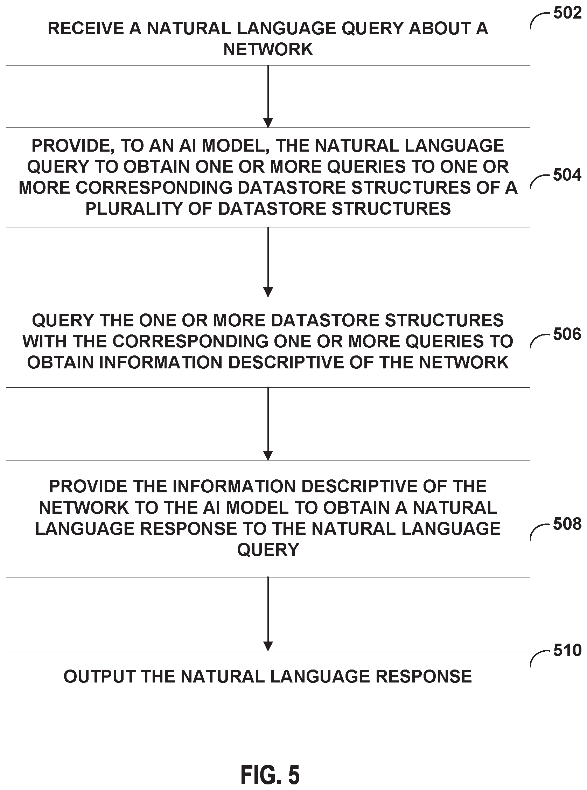

FIG. 5 is a flowchart illustrating an example operation in accordance with the techniques described in this disclosure. Fig. 5 is described with respect to FIG. 1 for convenience.

For example, conversational assistant agent 102 receives natural language query 104 about network system 2 from user device 120 (502). In some examples, natural language query 104 comprises a query regarding a health or a status of network system 2 or one or more elements of network system 2, such as one of compute nodes 10, one of network devices 18, or apps 30.

Conversational assistant agent 102 provides, to Al model 130, natural language query 104 to obtain one or more queries to one or more corresponding datastore structures 108 (504). In some examples, Al model 130 comprises an LLM, an SLM, an LSTM model, or another type of generative Al model, neural network, machine learning model, deep learning model, etc. In some optional examples, a RAG framework guides Al model 130. Each datastore structure 108 may employ a different schema. For example, each datastore structure 108 may store different types of data, store such data in different formats, and accept different parameters and inputs as well as generate different outputs according to different formats. In some examples, one or more of datastore structures 108 are ES datastores of various different schemas. In some examples, one or more of datastore structures 108 are SQL datastores of various different schemas. In some examples, datastore structures 108 may be any combination of ES datastores, SQL datastores, graph databases, or other types of datastore structures or datastores.

In some examples, natural language query 104 may be a complex, multi-step natural language query. In such an example, conversational assistant agent 102 provides, to Al model 130, the multi-step natural language query to obtain a plurality of single-step natural language queries. Then, for each single-step natural language query of the plurality of single-step natural language queries, conversational assistant agent 102 provides, to Al model 130, the single-step natural language query to obtain a query to a corresponding datastore structure 108. In this fashion, conversational assistant agent 102 may use Al model 130 to break down a complex, multi-step query into multiple simple queries, each of which may be processed into queries of different schemas for corresponding datastore structures 108.

Conversational assistant agent 102 queries the one or more datastore structures 108 with the corresponding one or more queries to obtain information descriptive of the network (506). In some examples, the information descriptive of the network comprises information descriptive of a current state of the network. In some examples, the information descriptive of the network comprises information descriptive of a future state of the network.

Conversational assistant agent 102 provides the information descriptive of the network to Al model 130 to obtain natural language response 106 to natural language query 104 (508). In some examples, natural language response 106 comprises information describing a health or a status of network system 2 or one or more elements of network system 2, such as one of compute nodes 10, one of network devices 18, or apps 30. Conversational assistant agent 102 outputs, to an output device, natural language response 106 (510).

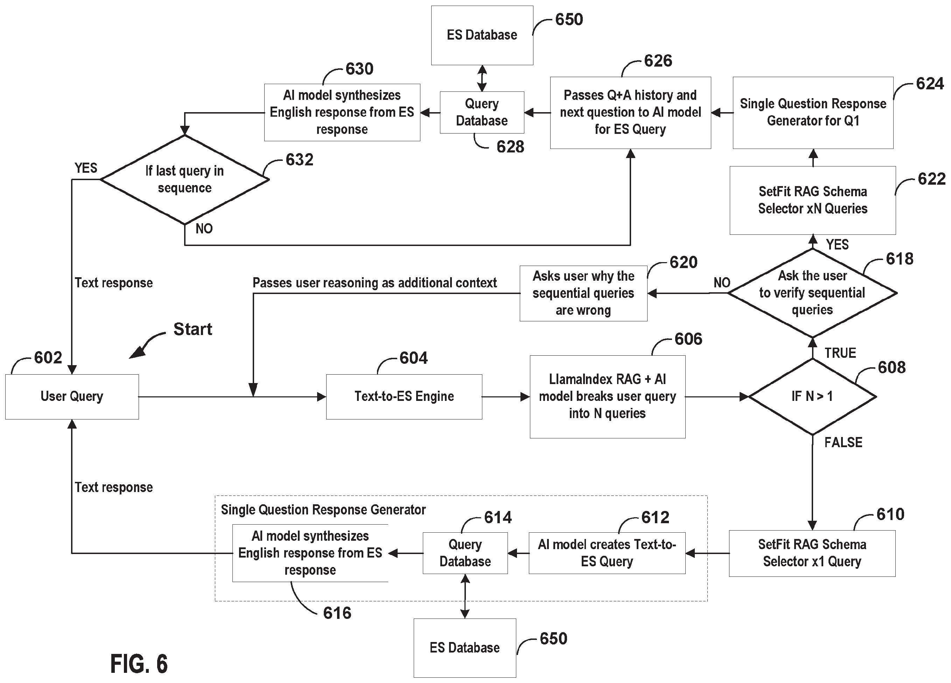

FIG. 6 is a flowchart illustrating a first example implementation of a conversational assistant agent that employs an Al model, such as an LLM, to answer queries from a user about a network using a datastore that stores information about the network, in accordance with the techniques of the disclosure. In some examples, the conversational assistant agent of FIG. 6 is an example of conversational assistant agent 102 of FIGS. 1 or 2. As described in more detail below, the flowchart of FIG. 6 illustrates two use cases: (1) where user query 602 comprises a single-step query (e.g., "FALSE" block of 608) and (2) where user query 602 comprises a complex, multi-step query (e.g., "TRUE" block of 608).

For example, conversational assistant agent 102 receives a user query (602). The conversational assistant agent 102 determines that a query to an ES datastore should be performed to answer the user query, and invokes a text-to-ES engine to process the user query (604). The conversational assistant agent 102 provides the user query to an Al model and LlamaIndex RAG to convert the user query into N queries (606).

In response to determining that user query 602 comprises a single-step query (N=1) (e.g., "FALSE" block of 608), conversational assistant agent 102 provides the user query 602 to a SetFit RAG Schema selector for a single query (610). The SetFit RAG Schema selector selects one or more schemas for ES datastores containing information relevant to user query 602. Based on the user query 602 and the selected schema, the Al model creates one or more text-to-ES queries for querying one or more ES databases 650 (612). Conversational assistant agent 102 performs the one or more text-to-ES queries upon one or more ES databases 650 to obtain information descriptive of network system 2 (614). Conversational assistant agent 102 provides the user query 602 and the information descriptive of network system 2 to the Al model to obtain a synthesized natural language response (616). Conversational assistant agent 102 provides the natural language response to an output device.

In response to determining that user query 602 comprises a complex, multi-step query (N>1) (e.g., "TRUE" block of 608), Al model and LlamaIndex RAG convert the complex, multi-step query into a set of *N* sequential queries. Conversational assistant agent 102 asks the user to verify the sequential queries are correct (618).

In response to the user indicating that the sequential queries are incorrect (e.g., "NO" block of 618), conversational assistant agent 102 asks the user to provide input as to why the sequential queries are wrong (620). Conversational assistant agent 102 provides the input to the text-to-ES engine for provision as additional input to the Al model to regenerate the queries.

In response to the user indicating that the sequential queries are correct (e.g., "YES" block of 618), conversational assistant agent 102 provides the user query 602 to a SetFit RAG Schema selector for *N* queries (622). The SetFit RAG Schema selector selects one or more schemas for ES datastores containing information relevant to a current query of the *N* queries (624). Conversational assistant agent 102 provides Quality Assurance (QA) history information and the current query to the Al model to obtain one or more text-to-ES queries for querying one or more ES databases 650 (626). Conversational assistant agent 102 performs the one or more text-to-ES queries upon one or more ES databases 650 to obtain information descriptive of network system 2 (628). Conversational assistant agent 102 provides the user query 602 and the information descriptive of network system 2 to the Al model to obtain a synthesized natural language response (630).

In response to determining that the query is not the last query in the sequence (e.g., "NO" block of 632), conversational assistant agent 102 provides the natural language response, the QA history information, and the next query of the N queries to the Al model to obtain one or more text-to-ES queries for a subsequent query to the one or more ES databases 650 (626). In this fashion, conversational assistant agent 102 iteratively performs operations 626, 628, and 630 until conversational assistant agent 102 determines that the query is the last query in the sequence (e.g., "YES" block of 632). Conversational assistant agent 102 provides the user query 602 and the information descriptive of network system 2 to the Al model to obtain a synthesized natural language response. Conversational assistant agent 102 provides the natural language response to an output device.

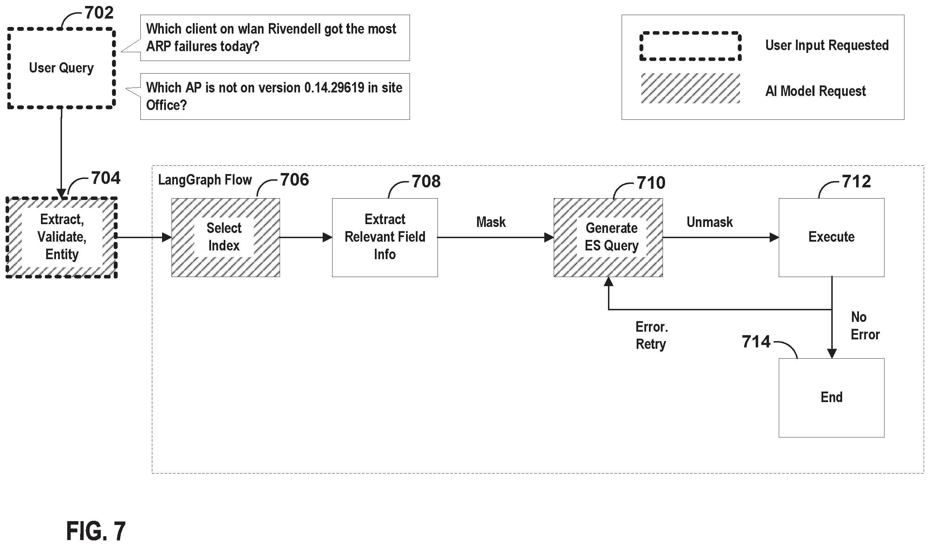

FIG. 7 is a flowchart illustrating a second example implementation of a conversational assistant agent that employs an Al model, such as an Al model, to answer queries from a user about a network using a datastore that stores information about the network, in accordance with the techniques of the disclosure. In some examples, the conversational assistant agent of FIG. 7 is an example of conversational assistant agent 102 of FIGS. 1 or 2. In the example of FIG. 7, operations bordered by dotted lines (e.g., operations 702, 704) indicate operations wherein user input is requested or received. Furthermore, in the example of FIG. 7, operations shaded with hashing (e.g., operations 704, 706, 710) indicate operations wherein an Al model request or invocation is performed.

For example, conversational assistant agent 102 receives a user query (702). Conversational assistant agent 102 provides the user query to an Al model to extract the user query, validate, the user query, and identify an entity associated with the user query (704). In some examples, the Al model of FIG. 7 is a Microsoft Azure deployment of GPT-4o. In other examples, GPT-4o-mini or another model may be used. In some examples, the Al model extracts an entity from the query so each entity has "entity_type" and "entity_name". In some examples, the entity may need to be validated where an entity_type is either one of ["client", "wlan", "ssid", "site", "ap", "gateway", "switch"] and entity_name is specified. For each entity to validate, conversational assistant agent 102 searches for the entity internally within a user's organization, using existing APIs for entity search. In some examples, the entity search takes into account the user's info, such as a user's organizational identifier ("org_id"), to restrict the search to what the user would be looking for. If more than one entity is found, conversational assistant agent 102 asks the user to choose one. If a single entity is found, conversational assistant agent 102 proceeds without asking the user to validate. If no entity is found, conversational assistant agent 102 may ask the user to provide another valid entity. From the validated entity/entities, information (e.g. wcid, mac, id, etc.) is extracted and temporarily saved internally for the following steps.

Conversational assistant agent 102 provides the user query to the Al model to obtain a selection of one or more indices or datastore structures 108 of a plurality of indices or datastore structures 108 (706). Typically, the Al model is used to select a best-matching ES index from the user's query. The following is an example list of ES indices that network system 2 may use:
i. client_event*
ii. device_event*
iii. mxedge_event*
iv. wired_client_event*
v. aps_*
vi. clients_*
vii. mxedges
viii. switches_*
ix. wired_clients_*
i. entity_event_*
Such indices may be related to either events or entity information. In some examples, the Al model may receive, as an input, detailed index descriptions in a "YAML Ain't Markup Language" (YAML) file.

If the Al model selects an events-related index, conversational assistant agent 102 may also extract a subset of the query, or a cleaned query, that may more closely indicate a kind of event and what is experiencing the event. For example, for a query "which client had the most dhcp failures today", an example cleaned query would be "dhcp failures client."

Conversational assistant agent 102 extracts relevant field information from the user query (708). From the selected index, conversational assistant agent 102 selects fields that may provide useful or relevant information to answer the user's query, and specific values for some fields if specified. If the index is events-related, ev_type is one of the relevant fields. Conversational assistant agent 102 uses the cleaned query from the previous Index Assistant to find the closest ev_type value. Conversational assistant agent 102 uses pre-made metadata that maps values of ev_type from those indices to short sentences or descriptions, and vector embedding of those descriptions. In some examples, conversational assistant agent 102 uses cosine similarity of the embedding of that cleaned query and the embedding of ev_type descriptions to find the closest ev_type. Conversational assistant agent 102 output the selected fields and mappings of them, retrieved from the ES index's mapping.

In some examples, conversational assistant agent 102 applies a "mask" to the user query so as to remove customer or client information, such as proprietary, confidential, or private information, from the query. For example, conversational assistant agent 102 masks one or more actual values of fields with dummy values before sending the field info to the Al model to generate the ES query (as performed in the following step), so that customer data is not sent to the Al model. In some examples, fields which may be masked include a user's org_id, timestamp of query, values of entities (if the query contained any) extracted at the first step, and/or event type (ev_type), if any.

Conversational assistant agent 102 provides the user query to an Al model, along with mapping information of the ES index and "masked" field values, to generate an ES query to the selected one or more indices or datastore structures 108 (710). The Al model generates an ES query based on field info extracted in previous step. In some examples, conversational assistant agent 102 generates, based on the ES query, python code (with import statements and code for printing results), so that it the generated ES query can easily be executed.

Conversational assistant agent 102 executes the query (712). For example, conversational assistant agent 102 processes the generated ES query. In examples where the masking was used, Conversational assistant agent 102 unmasks the generated ES query so as to restore customer or client information to the ES query by unmasking the values and inserting actual field values into the ES query. Conversational assistant agent 102 check if certain fields are included in ES query, such as "org_id", "When," etc. If not included by the Al model, conversational assistant agent 102 adds them to the query. Similarly, this step optionally may include various information received from the user on whether the Al model made any mistakes, and if so, any associated fixes (e.g., such as using a nonexistent field that was not provided in the mapping info). In some examples, conversational assistant agent 102 performs additional processing to query for cleaner results (e.g., by performing a sort by descending date if not already sorted, etc.). Conversational assistant agent 102 runs the ES query. If an error occurs, conversational assistant agent 102 invokes the Al model to regenerate the ES query. In some examples, conversational assistant agent 102 may attempt to regenerate the ES query up to 3 times. Each step includes the masking, unmasking, and query processing. If it does not run into errors or reached the max number of iterations, the flow ends (714).

If no error occurs, conversational assistant agent provides the output of the ES query to an output device. In some examples, conversational assistant agent provides the output of the ES query to the Al model to generate a natural language response to user query 702, and provides the natural language response to the output device. In some optional examples, python code may be used to generate the response in the form of a sentence response, chart, bar graph, or table, depending on a type of query generated and response received, in a way the user can easily interpret.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor," "processing resources," or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, applications, or components may be implemented together or separately as discrete but interoperable logic devices. Depiction of different features as applications or units is intended to highlight different functional aspects and does not necessarily imply that such applications or units may be realized by separate hardware or software components. Rather, functionality associated with one or more applications or units may be performed by separate hardware or software components, or integrated within common or separate hardware or software components.

The techniques described in this disclosure may also be embodied or encoded in a computer-readable medium, such as a computer-readable storage medium or a computer readable transmission, comprising (e.g. storing and/or conveying) instructions. Instructions embedded or encoded in a computer-readable medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media. A computer-readable transmission media may include carrier waves, transmission signals or the like. A computer-readable transmission medium may convey instructions between components of a single computer system and/or between plural separate computer systems.

Therefore, from one perspective, there have been described techniques for performing queries upon network systems having multiple datastores of various different schemas based on a natural language query. In an example, a system receives a natural language query about a computer network. Multiple datastore structures include information descriptive of the computer network, and each datastore structure implements one of multiple different schemas. The system provides, to an artificial intelligence (AI) model, the natural language query to obtain queries to corresponding ones of the multiple datastore structures. The system queries the multiple datastore structures with the corresponding queries to obtain information descriptive of the computer network. The system provides the information descriptive of the computer network to the Al model to obtain a natural language response to the natural language query for outputting to an output device.

Further examples of feature combinations taught by the present disclosure are set out in the following numbered clauses.

Clause 1. A computing system comprising: one or more processing resources; and one or more non-transitory computer-readable storage media comprising instructions executable by the one or more processing resources to cause the computing system to: receive, from a user device, a natural language query about a network, wherein a plurality of datastore structures includes information descriptive of the network, and wherein each datastore structure of the plurality of datastore structures implements a different schema of a plurality of different schemas; provide, to an artificial intelligence (AI) model, the natural language query to obtain one or more queries to one or more corresponding datastore structures of the plurality of datastore structures; query the one or more datastore structures with the corresponding one or more queries to obtain the information descriptive of the network; provide the information descriptive of the network to the Al model to obtain a natural language response to the natural language query; and output the natural language response.

Clause 2. The computing system of clause 1, wherein the plurality of datastore structures comprise a plurality of Elastic Search (ES) datastore structures.

Clause 3. The computing system of clause 1 or 2, wherein the plurality of datastore structures comprise a plurality of Structured Query Language (SQL) datastore structures.

Clause 4. The computing system of clause 1, 2 or 3, wherein the Al model comprises a Large Language Model (LLM).

Clause 5. The computing system of any preceding clause, wherein a Retrieval-augmented generation (RAG) guides the Al model.

Clause 6. The computing system of any preceding clause wherein the information descriptive of the network comprises at least one of: information descriptive of a current state of the network; or information descriptive of a future state of the network.

Clause 7. The computing system of any preceding clause, wherein, to provide, to the Al model, the natural language query to obtain the one or more queries to the one or more corresponding datastore structures of the plurality of datastore structures, the instructions further cause the computing system to: provide, to the Al model, the natural language query to obtain a selection of one or more schemas corresponding to the one or more datastore structures of the plurality of datastore structures; and provide, to the Al model, the natural language query and the selected one or more schemas to obtain, for each schema of the one or more schemas, a query to a corresponding datastore structure of the one or more datastore structures corresponding to the schema.

Clause 8. The computing system of any preceding clause, wherein, to provide, to the Al model, the natural language query to obtain the one or more queries to the one or more corresponding datastore structures of the plurality of datastore structures, the instructions further cause the computing system to: provide, to the Al model, the natural language query to obtain a selection of the one or more datastore structures of the plurality of datastore structures; and provide, to the Al model, the natural language query and the selection of the one or more datastore structures of the plurality of datastore structures to obtain the one or more queries to the one or more corresponding datastore structures of the plurality of datastore structures.

Clause 9. The computing system of any preceding clause, wherein the natural language query comprises a multi-step natural language query, and wherein, to provide the natural language query to obtain the one or more queries to the one or more corresponding datastore structures, the instructions further cause the computing system to: provide, to the Al model, the multi-step natural language query to obtain a plurality of single-step natural language queries; and for each single-step natural language query of the plurality of single-step natural language queries, provide, to the Al model, the single-step natural language query to obtain a query to a corresponding datastore structure of the plurality of datastore structures.

Clause 10. The computing system of any preceding clause, wherein, to query the one or more datastore structures with the corresponding one or more queries to obtain the information descriptive of the network, the instructions further cause the computing system to: query a first datastore structure of the one or more datastore structures with a first query of the one or more queries to obtain first information descriptive of the network; parameterize a second query of the one or more queries with the first information descriptive of the network; and query a second datastore structure of the one or more datastore structures with the parameterized second query to obtain second information descriptive of the network.

Clause 11. The computing system of any preceding clause, wherein, to query the one or more datastore structures with the corresponding one or more queries to obtain the information descriptive of the network, the instructions further cause the computing system to: iteratively query the one or more datastore structures with the corresponding one or more queries to obtain the information descriptive of the network.

Clause 12. A method comprising: receiving, by processing resources of a computing system, from a user device, a natural language query about a network, wherein a plurality of datastore structures includes information descriptive of the network, and wherein each datastore structure of the plurality of datastore structures implements a different schema of a plurality of different schemas; providing, by the processing resources, to an artificial intelligence (AI) model, the natural language query to obtain one or more queries to one or more corresponding datastore structures of the plurality of datastore structures; querying, by the processing resources, the one or more datastore structures with the corresponding one or more queries to obtain the information descriptive of the network; provide the information descriptive of the network to the Al model to obtain a natural language response to the natural language query; and outputting, by the processing resources, the natural language response.

Clause 13. The method of clause 12, wherein the plurality of datastore structures comprise a plurality of Elastic Search (ES) datastore structures.

Clause 14. The method of clause 12 or 13, wherein the plurality of datastore structures comprise a plurality of Structured Query Language (SQL) datastore structures.

Clause 15. The method of clause 12, 13 or 14, wherein the Al model comprises a Large Language Model (LLM).

Clause 16. The method of any of clauses 12 to 15, wherein a Retrieval-augmented generation (RAG) guides the Al model.

Clause 17. The method of any of clauses 12 to 16, wherein the information descriptive of the network comprises at least one of: information descriptive of a current state of the network; or information descriptive of a future state of the network.

Clause 18. The method of any of clauses 12 to 17, wherein providing, to the Al model, the natural language query to obtain the one or more queries to the one or more corresponding datastore structures of the plurality of datastore structures comprises: providing, to the Al model, the natural language query to obtain a selection of one or more schemas corresponding to the one or more datastore structures of the plurality of datastore structures; and providing, to the Al model, the natural language query and the selected one or more schemas to obtain, for each schema of the one or more schemas, a query to a corresponding datastore structure of the one or more datastore structures corresponding to the schema.

Clause 19. The method of any of clauses 12 to 18, wherein providing, to the Al model, the natural language query to obtain the one or more queries to the one or more corresponding datastore structures of the plurality of datastore structures comprises: providing, to the Al model, the natural language query to obtain a selection of the one or more datastore structures of the plurality of datastore structures; and providing, to the Al model, the natural language query and the selection of the one or more datastore structures of the plurality of datastore structures to obtain the one or more queries to the one or more corresponding datastore structures of the plurality of datastore structures.

Clause 20. A computing system comprising: one or more processing resources; and one or more non-transitory computer-readable storage media comprising instructions executable by the one or more processing resources to cause the computing system to: receive, from a user device, a natural language query about a network, wherein a plurality of Elastic Search (ES) datastore structures includes information descriptive of a current state of the network, and wherein each datastore structure of the plurality of datastore structures implements a different schema of a plurality of different schemas; provide, to a Large Language Model (LLM), the natural language query to obtain one or more queries to one or more corresponding ES datastore structures of the plurality of ES datastore structures; query the one or more ES datastore structures with the corresponding one or more queries to obtain the information descriptive of the current state of the network; provide the information descriptive of the current state of the network to the LLM to obtain a natural language response to the natural language query; and output the natural language response.

## Claims

1. A computing system comprising:
one or more processing resources; and
one or more non-transitory computer-readable storage media comprising instructions executable by the one or more processing resources to cause the computing system to:
receive, from a user device, a natural language query about a network, wherein a plurality of datastore structures includes information descriptive of the network, and wherein each datastore structure of the plurality of datastore structures implements a different schema of a plurality of different schemas;
provide, to an artificial intelligence (AI) model, the natural language query to obtain one or more queries to one or more corresponding datastore structures of the plurality of datastore structures;
query the one or more datastore structures with the corresponding one or more queries to obtain the information descriptive of the network;
provide the information descriptive of the network to the Al model to obtain a natural language response to the natural language query; and
output the natural language response.

2. The computing system of claim 1, wherein the plurality of datastore structures comprise a plurality of Elastic Search (ES) datastore structures.

3. The computing system of claim 1 or 2, wherein the plurality of datastore structures comprise a plurality of Structured Query Language (SQL) datastore structures.

4. The computing system of claim 1, 2 or 3, wherein the Al model comprises a Large Language Model (LLM).

5. The computing system of any preceding claim, wherein a Retrieval-augmented generation (RAG) guides the Al model.

6. The computing system of any preceding claim wherein the information descriptive of the network comprises at least one of:
information descriptive of a current state of the network; or
information descriptive of a future state of the network.

7. The computing system of any preceding claim, wherein, to provide, to the Al model, the natural language query to obtain the one or more queries to the one or more corresponding datastore structures of the plurality of datastore structures, the instructions further cause the computing system to:
provide, to the Al model, the natural language query to obtain a selection of one or more schemas corresponding to the one or more datastore structures of the plurality of datastore structures; and
provide, to the Al model, the natural language query and the selected one or more schemas to obtain, for each schema of the one or more schemas, a query to a corresponding datastore structure of the one or more datastore structures corresponding to the schema.

8. The computing system of any of claims 1 to 6, wherein, to provide, to the Al model, the natural language query to obtain the one or more queries to the one or more corresponding datastore structures of the plurality of datastore structures, the instructions further cause the computing system to:
provide, to the Al model, the natural language query to obtain a selection of the one or more datastore structures of the plurality of datastore structures; and
provide, to the Al model, the natural language query and the selection of the one or more datastore structures of the plurality of datastore structures to obtain the one or more queries to the one or more corresponding datastore structures of the plurality of datastore structures.

9. The computing system of any preceding claim,
wherein the natural language query comprises a multi-step natural language query, and
wherein, to provide the natural language query to obtain the one or more queries to the one or more corresponding datastore structures, the instructions further cause the computing system to:
provide, to the Al model, the multi-step natural language query to obtain a plurality of single-step natural language queries; and
for each single-step natural language query of the plurality of single-step natural language queries, provide, to the Al model, the single-step natural language query to obtain a query to a corresponding datastore structure of the plurality of datastore structures.

10. The computing system of any preceding claim, wherein, to query the one or more datastore structures with the corresponding one or more queries to obtain the information descriptive of the network, the instructions further cause the computing system to:
query a first datastore structure of the one or more datastore structures with a first query of the one or more queries to obtain first information descriptive of the network;
parameterize a second query of the one or more queries with the first information descriptive of the network; and
query a second datastore structure of the one or more datastore structures with the parameterized second query to obtain second information descriptive of the network.

11. The computing system of any preceding claim, wherein, to query the one or more datastore structures with the corresponding one or more queries to obtain the information descriptive of the network, the instructions further cause the computing system to:
iteratively query the one or more datastore structures with the corresponding one or more queries to obtain the information descriptive of the network.

12. A method comprising:
receiving, by processing resources of a computing system, from a user device, a natural language query about a network, wherein a plurality of datastore structures includes information descriptive of the network, and wherein each datastore structure of the plurality of datastore structures implements a different schema of a plurality of different schemas;
providing, by the processing resources, to an artificial intelligence (AI) model, the natural language query to obtain one or more queries to one or more corresponding datastore structures of the plurality of datastore structures;
querying, by the processing resources, the one or more datastore structures with the corresponding one or more queries to obtain the information descriptive of the network;
provide the information descriptive of the network to the Al model to obtain a natural language response to the natural language query; and
outputting, by the processing resources, the natural language response.

13. The method of claim 12, further comprising steps corresponding to any of the functionality defined in any of claims 1 to 11.

14. A computer readable medium comprising instructions that, when executed by one or more processing resources, cause the one or more processing resources to carry out the method of claim 12 or 13.
